# EUROPÄISCHE PATENTANMELDUNG

(11) **EP 2 508 413 A1**
(43) Veröffentlichungstag der Anmeldung: **10.10.2012**
(21) Anmeldenummer: 11161497.0
(22) Anmeldetag: 07.04.2011
(51) Int. Cl.: B62D 25/04, B62D 29/00

(54) **Verfahren zum Versteifen einer einen Hohlraum bildenden Hohlstruktur und Vorrichtung hierfür, Hohlstruktur und Beförderungsmittel**

(71) Anmelder: Sika Technology AG, 6340 Baar (CH)
(72) Erfinder: Frick, Karsten, 5453, Remetschwil (CH); Blank, Norman, 8803, Rüschlikon (CH); Hoefflin, Frank, Royal Oak, MI 48067 (US); Ackermann, Herbert, 8320, Fehraltorf (CH)
(74) Vertreter: Sika Patent Attorneys

(57) **Zusammenfassung**

Die Erfindung betrifft ein Verfahren zum Versteifen einer einen Hohlraum (11) bildenden Hohlstruktur (10), zumindest umfassend den Schritt einfügen von Versteifungsmitteln (2) in den Hohlraum. Das Verfahren zeichnet sich dadurch aus, dass die Versteifungsmittel (2) sich von einem Eckbereich (12a - 12d) einer Seitenfläche (14a - 14c) zu einem anderen, nichtbenachbarten Eckbereich (12a - 12d) einer anderen Seitenfläche (14a - c) der Hohlstruktur (10) durch den Hohlraum (11) erstrecken.

Weiterhin betrifft die Erfindung eine Vorrichtung (1) zum Versteifen einer einen Hohlraum (11) bildenden Hohlstruktur (10), mittels Versteifungsmitteln (2). Die Vorrichtung (1) zeichnet sich dadurch aus, dass die Versteifungsmittel (2) als mindestens ein steifes, vorgeformtes Versteifungselement (2a, 2b) ausgebildet sind. Auch betrifft die Erfindung eine Hohlstruktur (10), mit mindestens einem Hohlraum (11), umfassend mindestens ein Versteifungssystem zum Versteifen der Hohlstruktur (10), und ein Beförderungsmittel mit mindestens einer Säulenstruktur.

## Beschreibung

Die Erfindung betrifft ein Verfahren zum Versteifen einer einen Hohlraum bildenden Hohlstruktur, insbesondere einer einen länglichen Hohlraum bildenden Hohlstruktur, zumindest umfassend den Schritt Einfügen von Versteifungsmitteln in den Hohlraum, gemäß dem Oberbegriff des Anspruchs 1.

Weiterhin betrifft die Erfindung eine Vorrichtung zum Versteifen einer einen Hohlraum bildenden Hohlstruktur, insbesondere einer einen länglichen Hohlraum bildenden Hohlstruktur, mittels Versteifungsmitteln zum Einfügen in den Hohlraum, gemäß dem Oberbegriff des Anspruchs 3.

Auch betrifft die Erfindung eine Hohlstruktur, insbesondere eine längliche Hohlstruktur, mit mindestens einem Hohlraum, umfassend mindestens ein Versteifungssystem zum Versteifen der Hohlstruktur, gemäß dem Oberbegriff des Anspruchs 9.

Zudem betrifft die Erfindung ein Beförderungsmittel mit mindestens einer Säulenstruktur, gemäß dem Oberbegriff des Anspruchs 11.

Versteifungssysteme zum Versteifen von Hohlstrukturen, insbesondere von Hohlstrukturen in tragenden Bauteilen von Kraftfahrzeugen, sind bereits bekannt. Diese Versteifungssysteme verhindern im Crashfall das Einknicken der Hohlstruktur. Dabei wird ein Körper in den Hohlraum eingebracht, der dieses Einknicken verhindert und die Crashbeständigkeit bzw. Steifigkeit der Hohlstruktur erhöht. Durch den Einsatz von derartigen Versteifungssystemen wird insbesondere in Kraftfahrzeugen und/oder Schienenfahrzeugen ein Insassenschutz bei Unfällen gewährleistet.

Die in die Hohlstrukturen eingebrachten Körper der bekannten Versteifungssysteme umfassen im Wesentlichen schäumbare Massen, insbesondere schäumende Klebstoffe, die auf einem Träger der Karosserie aufgebracht werden, mit welchem dann der Hohlraum der Hohlstruktur verschlossen wird. Alternativ werden die Träger der Karosserie mit einem nicht schäumenden, strukturellen Klebstoff an der Karosserie des Fahrzeuges fixiert. Diese Alternative bietet bereits eine verbesserte Steifigkeit gegenüber dem Auffüllen der Hohlstrukturen.

Trotzdem weisen die im Stand der Technik bekannten Versteifungssysteme diverse Nachteile auf. Ein Nachteil der Lösung mit schäumenden Klebstoffen sind vor allem die mechanischen Eigenschaften des Klebstoffes, insbesondere Druckfestigkeit und Dehnbarkeit bis zum Bruch des Materials. Die alternative Möglichkeit - Ankleben der Träger an der Karosserie - beinhaltet derzeit mehrere Probleme, für die der Stand der Technik bisher keine Lösung kennt. Zum einen ist die Zykluszeit dieses Vorgehens zu lang. Unter Zykluszeit wird hier die Zeit vom Auftragen des Klebstoffes auf den Stahl der Karosserie und den Träger bis zum Einsetzen des Trägers bzw. bis zum Befestigen des Trägers an der Karosserie des Kraftfahrzeuges verstanden. Dabei ist weiterhin der Materialaufwand an Klebstoff sehr groß, wodurch hohe Materialkosten entstehen. Diese Möglichkeit beinhaltet zusätzlich ein logistisches Problem, da der Träger aus Kunststoff fertig gespritzt am Produktionsort ankommt und der Klebstoff nachträglich aufgebracht werden muss.

Des Weiteren spielt das Korrosionsverhalten von Klebstoffen eine entscheidende Rolle. Die Korrosion von Strukturen aus Klebstoff ist wesentlich geringer und läuft langsamer ab als bei geschweißten Strukturen, da bei Strukturen aus Klebstoffen keine Lokalelemente verschiedener Elektronegativitäten entstehen.

Zudem ist die bei diesem Verfahren notwendige Schichtdicke des Klebstoffs von ungefähr 2 mm höher als das Optimum der Schichtdicke des Klebstoffes mit 0,2 mm.

Es ist daher Aufgabe der Erfindung, ein verbessertes Verfahren und eine verbesserte Vorrichtung zum Versteifen einer einen Hohlraum bildenden Hohlstruktur zu schaffen, welche die im Stand der Technik auftretenden Probleme löst. Insbesondere ist es Aufgabe der vorliegenden Erfindung eine Hohlstruktur sowie ein Beförderungsmittel hierfür zu schaffen.

Diese Aufgabe wird durch die Merkmale der unabhängigen Patentansprüche gelöst. Vorteilhafte Weiterbildungen der Erfindung sind Gegenstand untergeordneter Ansprüche.

Die Erfinder haben erkannt, dass sich eine crashsichere Versteifung eines Hohlraums einer Hohlstruktur durch das Einfügen von Versteifungsmitteln in Form von mindestens einer sich quer, das heißt insbesondere diagonal, durch den Hohlraum erstreckenden Platte realisieren lässt. Unter dem Begriff diagonal wird im Rahmen dieser Erfindung eine Anordnung eines Bauteils zwischen zwei Eckbereichen der Hohlstruktur verstanden. Dabei überkreuzen sich die Platten an einer Kreuzungsstelle. Die Kreuzungsstelle ist beispielsweise geschweißt, gestanzt, genietet, geschraubt und/oder geklebt. Die Platten erstrecken sich entweder über die gesamte Länge der Hohlstruktur oder nur über eine Teillänge der Hohlstruktur, so dass mehrere Platten in Reihe in der Hohlstruktur platziert werden.

Für eine sichere Verbindung der Versteifungsmittel mit der Hohlstruktur können diese mittels eines Klebstoffs an den Seitenflächen der Hohlstruktur angeklebt werden. Dabei wird der Klebstoff beispielsweise in Form von schmalen Klebelinien aufgebracht. Bei dem Klebstoff handelt es sich vorzugsweise um einen strukturellen Klebstoff. Strukturelle, crashfeste Klebstoffe gewährleisten eine besonders starke Haftung an und zwischen den zu verklebenden Bauteilen. Die Klebelinien weisen beispielsweise eine Schichtdicke von 0,1 mm bis 0,5 mm auf. Aus technischer Sicht liegt die optimale Schichtdicke bei 0,3 mm, allerdings kann die Schichtdicke aufgrund Ungenauigkeiten in der Produktion, beispielsweise Unterschiede in der Dicke gestanzter Metallteile, variieren. Beispielsweise werden die Klebelinien zum Befestigen jeweils einer Platte an zwei nichtbenachbarten Ecken der Hohlstruktur aufgebracht. Bei zwei in den Hohlraum eingefügten Platten sind diese somit annähernd diagonal in diesem angeordnet und überschneiden sich im Mittelpunkt des Hohlraumes. Zudem sind die Platten mit einer Vielzahl von Löchern ausführbar, um beispielsweise eine Gewichts- und/oder Materialersparnis zu erreichen. In einer besonderen Ausführung des Versteifungssystems wird eine Versteifung mittels Platten und dem Ausschäumen mit einem Klebstoff kombiniert.

Mit einer derartigen Versteifung lassen sich insbesondere die folgenden Vorteile realisieren:

Die Zykluszeit, das heißt die Zeit vom Auftragen des Klebstoffes auf die Hohlstruktur bis zum Weiterverarbeiten der Hohlstruktur ist stark verkürzt, da wesentlich weniger Klebstoff auf und/oder in die Hohlstruktur aufgebracht wird als im Vergleich zu den aus dem Stand der Technik bekannten Verfahren. Als Material der Hohlstruktur sind auch Metalle, beispielsweise Aluminium, Stähle und hochfeste Stähle, einsetzbar, da die verwendeten Klebstoffe auf diesen Materialien ausgezeichnete Hafteigenschaften aufweisen und diese Materialien vorteilhafterweise nicht komprimierbar sind. Zusätzlich weisen diese Materialien bereits von sich aus eine insbesondere für eine Verwendung im Fahrzeugbau geforderte Steifigkeit auf. Weiterhin ist das Gewicht der Versteifungsmittel beispielsweise durch eine gelochte Ausführung der Versteifungsmittel und somit auch der Materialaufwand reduzierbar. Ebenso ist die Schichtdicke des aufgetragenen Klebstoffes auf ein Optimum einstellbar, so dass die maximalen Klebeigenschaften erreicht werden.

Entsprechend diesem Grundgedanken schlagen die Erfinder vor, ein Verfahren zum Versteifen einer einen Hohlraum bildenden Hohlstruktur, insbesondere einer einen länglichen Hohlraum bildenden Hohlstruktur, zumindest umfassend den Schritt Einfügen von Versteifungsmitteln in den Hohlraum, dahingehend zu verbessern, dass die Versteifungsmittel sich von einem Eckbereich einer Seitenfläche zu einem anderen, nichtbenachbarten Eckbereich einer anderen Seitenfläche der Hohlstruktur durch den Hohlraum erstrecken.

In einer Ausführung definiert die Hohlstruktur einen länglichen, vorzugsweise rechteckigen Hohlraum. Der Hohlraum wird von mindestens drei, vorzugsweise vier, Seitenflächen der Hohlstruktur begrenzt. In einer Ausführung mit drei Seitenflächen ist die Hohlstruktur an einer Seite offen. Diese fehlende Seitenfläche ist beispielsweise durch eine separate Abdeckung, beispielsweise als Teil einer Karosserie, ersetzbar. Durch die fehlende Seitenfläche wird weiterhin eine Möglichkeit zum Überprüfen und/oder nachträglich Bearbeiten der Vorrichtung geschaffen. Die Ecken der Seitenflächen der Hohlstruktur bzw. des Hohlraumes werden vorteilhafterweise von zwei aneinandergrenzenden Seitenflächen gebildet. Unter Eckbereiche wird im Rahmen dieser Erfindung ein Teilbereich der Seitenflächen von höchstens 50%, bevorzugt höchstens 25%, am meisten bevorzugt höchsten 15%, ausgehend von den Ecken des Hohlraumes verstanden.

Vorzugsweise sind die Versteifungsmittel rechteckig ausgeführt mit vier, paarweise parallelen Seitenkanten, so dass ihre Fläche einer Diagonalebene der Hohlstruktur entspricht. Unter Diagonalebene wird im Rahmen dieser Erfindung eine Fläche verstanden, die zwischen den Ecken des Hohlraumes aufgespannt wird. Weiterhin vorteilhaft sind die Versteifungsmittel flach, das heißt eben, ausgeführt. Die Versteifungsmittel erstrecken sich erfindungsgemäß zwischen zwei nichtbenachbarten Eckbereichen, das heißt sie verlaufen schräg durch den Hohlraum. Insbesondere verlaufen die Versteifungsmittel diagonal durch den Hohlraum, wobei zwei nichtbenachbarte Ecken bei einer Ausführung eines rechteckigen Hohlraums sich jeweils gegenüberliegen. Demnach entspricht die Größe der Versteifungsmittel vorteilhafterweise einer diagonal zwischen zwei gegenüberliegenden Ecken angeordneten Fläche. In einer Ausführung entspricht die Länge des einen Versteifungsmittels der Länge des Hohlraumes. Unter Länge des Hohlraums wird die Erstreckung des Hohlraums entlang den Ecken bzw. Eckbereichen verstanden. In einer anderen Ausführung erstrecken sich die Versteifungsmittel über einen Teillänge des Hohlraums, so dass hierbei mehrere Versteifungsmittel nebeneinander in Reihe im Hohlraum anordnenbar sind.

Eine Ausführungsform des erfindungsgemäßen Verfahrens sieht den Schritt Auftragen von mindestens einer Klebelinie an mindestens zwei nichtbenachbarten Eckbereichen zweier Seitenflächen der Hohlstruktur vor. Die Versteifungsmittel sind zum crashsicheren Befestigen mit der Hohlstruktur beidseitig und sich somit durch den Hohlraum erstreckend in den Klebelinien anordnenbar. Das heißt, zwei parallele Seitenkanten der Versteifungsmittel sind in zwei Klebelinien an zwei nichtbenachbarten Eckebereichen positioniert. Die Klebelinien werden bevorzugt aus einem Klebstoff, insbesondere einem strukturellen, crashfesten Klebstoff, ausgebildet. Vorteilhafterweise sind die Klebelinien gerade, linienförmig, streifenförmig, getupft und/oder wellenförmig ausgeführt. Die Schichtdicke der Klebelinien ist bevorzugt derart ausgeführt, dass die maximalen Klebeigenschaften des Klebstoffes erreicht werden, beispielsweise ≤ 0,5 mm, bevorzugt ≤ 0,4 mm, weiter bevorzugt ≤ 0,3 mm. Die Klebelinien werden beispielsweise mittels Aufspritzen, Auftupfen und/oder Aufpinseln von Hand und/oder maschinell aufgebracht.

Insgesamt werden bei dem erfindungsgemäßen Verfahren vorteilhafterweise die folgenden Arbeitsschritt durchgeführt. In einem ersten Schritt erfolgt bevorzugt das Auftragen der Klebelinien an nichtbenachbarten Eckbereichen der Seitenflächen. In einem weiteren Schritt erfolgt vorteilhafterweise das Einfügen der Versteifungsmittel in den Hohlraum, wobei die Versteifungsmittel in den Klebelinien positioniert werden, sodass sich diese quer, bevorzugt diagonal, durch den Hohlraum erstrecken.

Weiterhin schlagen die Erfinder vor, eine Vorrichtung zum Versteifen einer einen Hohlraum bildenden Hohlstruktur, insbesondere einer einen länglichen Hohlraum bildenden Hohlstruktur, mittels Versteifungsmitteln zum Einfügen in den Hohlraum, dahingehend zu verbessern, dass die Versteifungsmittel als mindestens ein steifes, vorgeformtes Versteifungselement ausgebildet sind, welches sich zwischen zwei nichtbenachbarten Eckbereichen der Hohlstruktur durch den Hohlraum erstreckt. Durch diese vorteilhafte Anordnung der Versteifungselemente schräg durch den Hohlraum, insbesondere diagonal durch den Hohlraum, wird die Hohlstruktur beispielsweise gegen ein Einknicken der Eckbereiche versteift. In einer Ausführungsform ist das mindestens eine Versteifungselement als flächiges, insbesondere plattenförmiges Versteifungselement mit vier, vorzugsweise paarweise parallelen Seitenkanten ausgeführt. Beispielsweise ist das mindestens eine Versteifungselement als Platte ausgeführt. Bevorzugt ist das mindestens eine Versteifungselement zumindest in seinem mittleren Bereich eben, das heißt ungewellt, ungebogen und/oder ungeknickt ausgeführt. Weiterhin bevorzugt ist das mindestens eine Versteifungselement rechteckig ausgeführt, wobei die Grundfläche eines Versteifungselementes vorteilhafterweise der Diagonalebene zwischen zwei nichtbenachbarten, das heißt gegenüberliegenden Eckbereichen aufgespannt wird.

In einer Ausführungsform der erfindungsgemäßen Vorrichtung ist das mindestens eine Versteifungselement zur Befestigung mit der Hohlstruktur in mindestens zwei, an zwei nichtbenachbarten Eckbereichen der Hohlstruktur aufgetragenen Klebelinien angeordnet. Vorteilhafterweise ist das mindestens eine Versteifungselement mit zwei, parallelen Seitenkanten in den Klebelinien angeordnet. In einer Ausführungsform sind in den Klebelinien angeordneten Seitenkanten des mindestens einen Versteifungselementes abgekantet, das heißt winkelig umgeknickt, so dass eine breitere Auflage- bzw. Kontaktfläche zwischen Versteifungselement und Klebelinie ausbildbar ist. Die erfindungsgemäßen Klebelinien aus dem strukturellen Klebstoff gewährleisten eine besonders starke Haftung zwischen der Hohlstruktur und den Verbindungsmitteln.

In einer Ausführungsform sind mehr als ein Versteifungselement vorgesehen. In einer bevorzugten Ausführungsform sind zwei Versteifungselemente, in einer anderen Ausführungsform sind drei oder vier Versteifungselemente ausgeführt. In den Ausführungsformen mit mehr als einem Versteifungselement erstrecken sich diese sich überkreuzend durch den Hohlraum. Bei zwei sich überkreuzenden Versteifungselementen wird hierbei eine Kreuzungsstelle ausgebildet, bei drei oder mehr sich kreuzenden Versteifungselementen werden entsprechend zwei oder mehr Kreuzungsstellen ausgebildet. Weiterhin sind mehrere, sich jeweils überkreuzende Versteifungselemente nebeneinander, entlang der Länge des Hohlraums anklebbar.

Alternativ zu den zwei sich überkreuzenden Versteifungselementen kann auch das ein Versteifungselement im Schnitt gesehen X-förmig ausgestaltet sein, so dass es sich mit seinen Enden in die Eckbereiche des Hohlraums erstreckt und aufgrund der festen zentralen Verbindung der vier Auswüchse zu einer besonders steifen Struktur führt.

Die Versteifungselemente sind beispielsweise separat oder miteinander verbunden ausgeführt. Bei einer separaten Ausführung der Versteifungselemente sind die Kreuzungsstellen der Versteifungselemente beispielsweise gesteckt ausgeführt. Andernfalls sind die Kreuzungsstellen der Versteifungselemente geschweißt, gestanzt, genietet, geschraubt und/oder geklebt. Vorteilhafterweise sind die Versteifungselemente bereits vor dem Einfügen in den Hohlraum miteinander verbindbar. Eine andere Ausführungsform sieht vor, dass die Versteifungselemente miteinander verbindbar sind, wenn bereits ein oder zwei Versteifungselemente in den Hohlraum eingefügt sind.

In einer alternativen Ausführungsform der erfindungsgemäßen Verbindungsmittel sind die Verbindungsmittel stangenförmig ausgeführt, beispielsweise als Stangenelemente. Die Stangenelemente weisen beispielsweise einen rechteckigen, runden oder ovalen Querschnitt auf. Die Stangenelemente sind vorzugsweise diagonal in dem Hohlraum anbringbar, das heißt jeweils zwischen zwei nichtbenachbarten Eckbereichen. Beispielsweise wird eine Vielzahl von Stangenelementen alternierend, diagonal in den Hohlraum eingefügt. Die Befestigung der Stangenelemente mit der Hohlstruktur ist erfindungsgemäß geklebt und/oder zusätzlich noch gesteckt. Benachbarte Stangenelemente sind beispielsweise miteinander verbunden oder separat ausgeführt. Bei einer Ausführung mit separaten Stangenelementen sind diese auch nachträglich und abhängig von speziellen Anforderungen an die Hohlstruktur in den Hohlraum einfügbar.

In noch einer alternativen Ausführungsform umfassen die Verbindungsmittel mindestens ein plattenförmiges Versteifungselement und mindestens ein Stangenelement, welche entweder separat oder miteinander verbindbar ausgeführt sind.

In einer anderen Ausführungsform der erfindungsgemäßen Vorrichtung ist vorgesehen, dass das mindestens eine Versteifungselement Aussparungen aufweist, um eine Materialeinsparung und/oder eine Gewichtsreduktion zu bewirken. Diese Aussparungen sind beispielsweise rund, eckig, länglich, oval, gestanzt, gelocht, gebohrt und/oder gesägt ausgeführt. Die Aussparungen sind beispielsweise als lochförmige, das heißt durch das Versteifungsmittel durchgehende Aussparungen, oder als oberflächliche Aussparungen ausgeführt. Je tiefer die Aussparungen, umso größer ist vorteilhafterweise die Material- und Gewichtsersparnis. Insgesamt ist hierbei insbesondere darauf zu achten, dass die Anzahl und/oder Größe der Aussparungen die Steifigkeit der Versteifungselemente nicht negativ beeinflusst. In einer Ausführung sind die Aussparungen als Kreuzungsstellen verschiedener Verbindungsmittel nutzbar. Beispielsweise ist mindestens ein Stangenelement durch Aussparungen in einem mittleren Bereich eines plattenförmigen Versteifungselementes anbringbar. Dabei ist das mindestens eine Stangenelemente vorteilhaft gegenläufig diagonal zu dem Versteifungselement ausgerichtet. Die Form der Aussparungen entspricht in dieser Ausführung bevorzugt der komplementären Querschnittsform der Stangenelemente, um eine vorteilhaften Festsitz und darüber eine zusätzliche Versteifung der Hohlstruktur zu erreichen.

Vorteilhafterweise ist das mindestens eine Versteifungselement aus mindestens einem Material ausgebildet, ausgewählt aus der folgenden Materialgruppe: Metall, Stahl, insbesondere hochfester Stahl, Aluminium, Kunststoff, insbesondere Polyamid, kohlenfaserverstärkter Kunststoff und glasfaserverstärkter Kunststoff. Diese Materialien weisen vorteilhafte Materialeigenschaften, wie Gewicht, Härte, Verformbeständigkeit, auf. Weiterhin sind diese Materialien einfach zu bearbeiten. Beispielsweise ist das mindestens eine Versteifungselement als Lochblech mit gestanzten Löchern ausgeführt.

Weiterhin sind die mindestens zwei Klebelinien aus einem Material ausgebildet, ausgewählt aus der folgenden Materialgruppe, umfassend: strukturelle Klebstoffe, wie sie beispielsweise aus der Produktionsreihe "Sikapower" der Anmelderin bekannt sind. Bei der Wahl des Klebstoffes zum Ausbilden der Klebelinien ist vor allem auf Klebeigenschaften, Temperaturbeständigkeit, Langlebigkeit und Belastbarkeit der Klebverbindung zu achten. Vorteilhafterweise weisen die Klebelinien eine Schichtdicke von ≤ 0,5 mm, bevorzugt ≤ 0,4 mm, weiter bevorzugt ≤ 0,3 mm. Weiterhin bieten die erfindungsgemäß eingesetzten strukturellen Klebstoffe besonders vorteilhafte Hafteigenschaften auf den erfindungsgemäß eingesetzten Materialien der Versteifungselemente.

Vorteilhafterweise ist die erfindungsgemäße Vorrichtung nach dem erfindungsgemäßen Verfahren in den Hohlraum einer Hohlstruktur einfügbar, um diesen gegen ein Einknicken bei einem Kraftaufwand von außen zu schützen. Dabei werden bei zwei in den Hohlraum einzufügenden plattenförmigen Versteifungselementen vorzugsweise vier Klebelinien aufgetragen. Die Klebelinien werden beispielsweise in den Eckbereichen des Hohlraums aufgetragen. Jeweils zwei Klebelinien an zwei nichtbenachbarten Eckbereichen dienen vorteilhafterweise zum Befestigen eines Versteifungselementes. Bei dieser Ausführung sind die Versteifungselemente sich überkreuzend, diagonal im Hohlraum angeordnet. Die Versteifungselemente sind entweder außerhalb des Hohlraums, das heißt vor dem eigentlichen Einfügen in den Hohlraum, miteinander verbindbar, oder erst im Hohlraum, dann erfolgt das Einfügen der Versteifungselemente in den Hohlraum nacheinander. Das Einsetzen in den Hohlraum erfolgt also entweder einzeln und nacheinander oder beide gleichzeitig. Die Versteifungselemente überkreuzen sich an einer Kreuzungsstelle und sind dort miteinander verbunden. Die Verbindung erfolgt beispielsweise durch Stecken, Schweißen etc.

Weiterhin betrifft die Erfindung eine Hohlstruktur, insbesondere eine längliche Hohlstruktur, mit mindestens einem Hohlraum, umfassend mindestens ein Versteifungssystem zum Versteifen der Hohlstruktur, wobei mindestens ein Versteifungssystem als erfindungsgemäße Vorrichtung ausgebildet ist. Die Hohlstruktur bildet mittels drei oder vier Seitenflächen einen insbesondere rechteckigen Hohlraum aus. Die Hohlstruktur ist beispielsweise aus Metall, Stahl, insbesondere hochfester Stahl, Aluminium, Kunststoff, insbesondere Polyamid, kohlenfaserverstärkter Kunststoff und glasfaserverstärkter Kunststoff ausgebildet. Auf diesen Materialien haften die erfindungsgemäß eingesetzten strukturellen Klebstoffe besonders vorteilhaft, so dass eine langzeitstabile und crashsichere Klebverbindung zwischen der Hohlstruktur einerseits und den Versteifungsmitteln andererseits ausführbar ist.

Die in der Hohlstruktur anklebbaren Versteifungsmittel entsprechen mit ihrer Länge in einer Ausführung der Länge der Hohlstruktur, in einer anderen Ausführung einer Teillänge der Hohlstruktur.

In noch einer anderen Ausführungsform sind die Versteifungsmittel in der Hohlstruktur quer zur Länge der Hohlstruktur, das heißt entlang der Breite der Hohlstruktur, angeordnet. Hierbei sind vorteilhafterweise mehrere sich überkreuzende Versteifungsmittel nebeneinander, entlang der Länge der Hohlstruktur in dieser anbringbar. Die Länge der Versteifungsmittel entspricht vorteilhafterweise der Breite der Hohlstruktur, das heißt dem Abstand der Seitenflächen quer zur Länge der Hohlstruktur. Bei einer derartigen Ausführung der erfindungsgemäßen Vorrichtung wird insbesondere ein Eindrücken der Seitenflächen der Hohlstruktur verhindert.

Zudem betrifft die Erfindung ein Beförderungsmittel mit mindestens einer Säulenstruktur, wobei die mindestens eine Säulenstruktur als erfindungsgemäße Hohlstruktur ausgebildet ist. Beispielsweise ist das Beförderungsmittel ein Kraftfahrzeug, wie ein Personenkraftwagen, ein Bus oder ein Lastkraftwagen. Alternativ ist das Beförderungsmittel ein Schienenfahrzeug, wie ein Zug, eine U-Bahn oder eine Straßenbahn. Bei der Säulenstruktur handelt es sich beispielsweise um eine A-, B- und/oder C-Säule des Beförderungsmittels.

Durch die erfindungsgemäße Vorrichtung und das erfindungsgemäße Verfahren zum Versteifen der Säulenstruktur wird im Crashfall ein Verbiegen und/oder Einknicken der Säulenstruktur, insbesondere der Eckbereiche der Säulenstruktur, verhindert. Dies bewirkt einen erhöhten Insassenschutz, beispielsweise bei Unfällen mit einem Überschlag des Beförderungsmittels.

Im Folgenden wird die Erfindung anhand eines bevorzugten Ausführungsbeispiels mit Hilfe der Figuren näher beschrieben, wobei darauf hingewiesen wird, dass nur die für das unmittelbare Verständnis der Erfindung wesentlichen Elemente gezeigt sind.

Es zeigen im Einzelnen:
- FIG 1:: eine schematische, perspektivische Teildarstellung einer Hohlstruktur;
- FIG 2:: eine schematische, perspektivische Darstellung erfindungsgemäßer Klebelinien;
- FIG 3:: eine schematische, perspektivische Darstellung erfindungsgemäßer Versteifungsmittel in einer bevorzugten Ausführungsform mit einem Detail A;
- FIG 4:: Detail A gemäß der Figur 3;
- FIG 5:: eine schematische, perspektivische Darstellung einer erfindungsgemäßen Vorrichtung mit einer Hohlstruktur gemäß der Figur 1, Klebelinien gemäß der Figur 2 und Versteifungsmitteln gemäß der Figur 3;
- FIG 6:: eine schematische Querschnittsdarstellung einer Hohlstruktur in einer weiteren Ausführung;
- FIG 7:: eine schematische Querschnittsdarstellung einer Hohlstruktur in einer weiteren Ausführung;
- FIG 8:: eine schematische, perspektivische Darstellung einer erfindungsgemäßen Vorrichtung mit einer Hohlstruktur in einer anderen Ausführung.

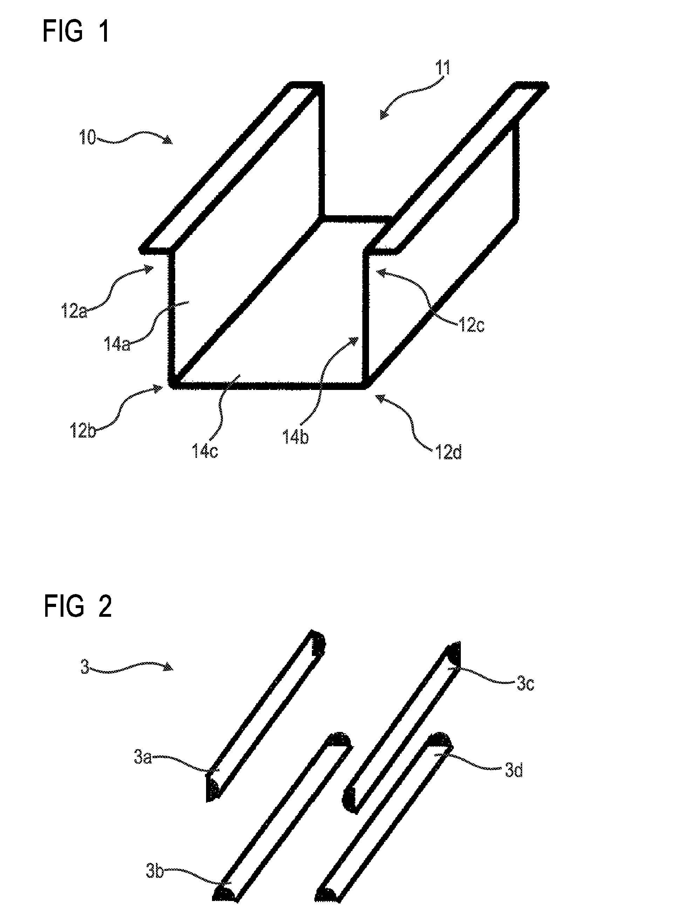

Die **Figur 1** zeigt eine schematische, perspektivische Teildarstellung einer Hohlstruktur 10. Die Hohlstruktur 10 ist als längliche, rechteckige Hohlstruktur 10 ausgeführt. Die Hohlstruktur 10 bildet einen Hohlraum 11 aus, wobei der Hohlraum 11 von drei Seitenflächen 14a - 14c begrenzt wird. Die Seitenfläche 14a und die Seitenfläche 14b sind gegenüberliegend angeordnet. Dazwischen ist rechtwinkelig dazu die Seitenfläche 14c angeordnet. Die Seitenflächen 14a - 14c umfassen vier Eckbereiche 12a - 12d, die von den angrenzenden Seitenflächen 14a - 14c definiert werden. Ein Eckbereich umfasst circa 25% der angrenzenden Seitenfläche 14a - 14c.

Die **Figur 2** zeigt eine schematische, perspektivische Darstellung erfindungsgemäßer Klebelinien 3a - 3d. Die Klebelinien 3a - 3d sind als gerade, durchgehende Linien ausgeführt. Weiterhin sind die Klebelinien 3a - 3d aus einem strukturellen Klebstoff 3 ausgebildet. In der Ausführung gemäß der Figur 2 sind die Klebelinien 3a und 3c gegenüberliegend in den Eckbereichen zweier auf zwei hier nicht gezeigten Seitenflächen der Hohlstruktur angeordnet. Die Klebelinien 3b und 3d sind in den Eckbereichen einer ebenfalls nicht gezeigten Seitenfläche der Hohlstruktur angeordnet.

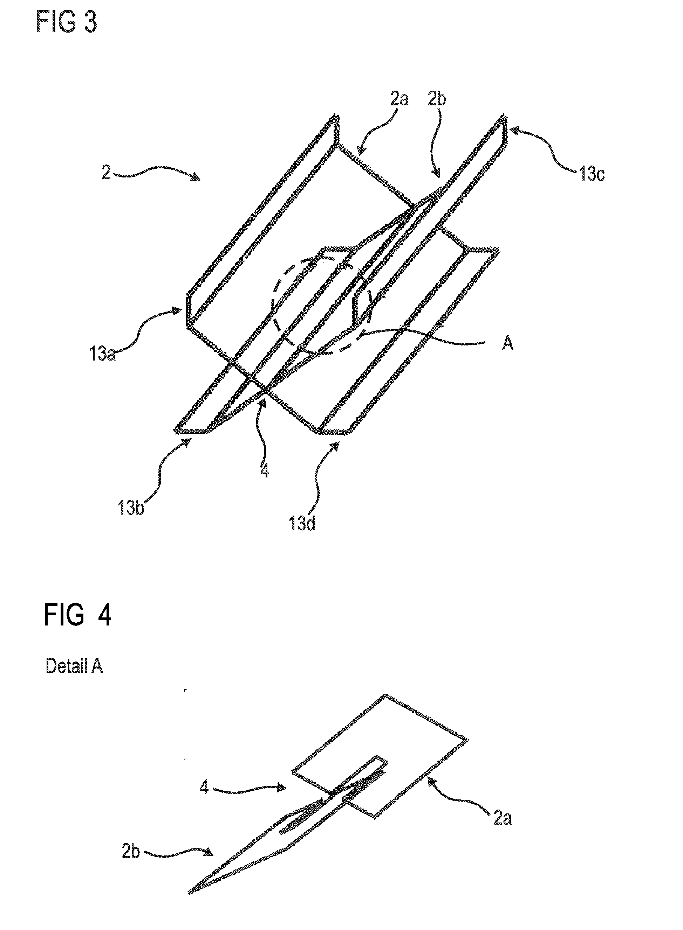

Die **Figur 3** zeigt eine schematische, perspektivische Darstellung erfindungsgemäßer Versteifungsmittel 2 in einer bevorzugten Ausführungsform mit einem Detail A. Die Versteifungsmittel 2 sind als zwei Versteifungselemente in Form von rechtwinkligen, ebenen Platten 2a und 2b ausgeführt. Jeweils zwei gegenüberliegende äußere Bereiche der Platten 2a und 2b sind in der Ausführung der Figur 3 zu Kontaktflächen 13a - 13d abgekantet. Weiterhin überkreuzen sich die Platten 2a und 2b in einem mittleren Bereich an einer Kreuzungsstelle 4.

Das Detail A zeigt einen vergrößerten Ausschnitt der Figur 3 im Bereich der Kreuzungsstelle 4, siehe auch **Figur 4**. Die Kreuzungsstelle 4 ist als Steckverbindung ausgeführt, wobei die Platten 2a und 2b steckbar ausgeführt sind. Dazu weisen die Platten 2a und 2b jeweils einen komplementären Schlitz auf, an denen die Platten 2a und 2b ineinander steckbar sind.

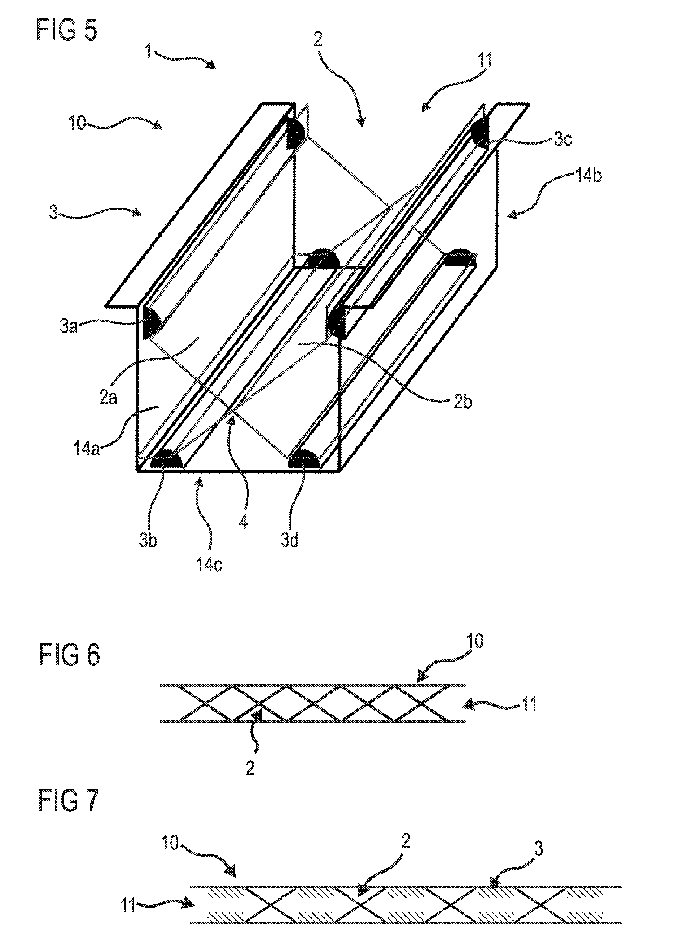

Die **Figur 5** zeigt eine schematische, perspektivische Darstellung einer erfindungsgemäßen Vorrichtung 1 mit einer Hohlstruktur 10 gemäß der Figur 1, Klebelinien 3a - 3d gemäß der Figur 2 und Versteifungsmitteln 2 gemäß der Figur 3. Die Hohlstruktur 10 bildet mit drei Seitenflächen 14a - 14c einen rechteckigen, länglichen Hohlraum 11 aus. Der Hohlraum 11 ist an einer Seite offen. In den Eckbereichen sind Klebelinien 3a - 3d angeordnet. In den Klebelinien 3a - 3d sind zwei Versteifungselemente in Form von rechtwinkeligen Platten 2a und 2b angeordnet, so dass sich die Platten diagonal zwischen zwei gegenüberliegenden Eckbereichen erstrecken. Dabei sind die in den Klebelinien 3a - 3d angeordneten Seitenkanten der Platten 2a und 2b zu den jeweiligen Kontaktflächen abgekantet. Die Platten 2a und 2b überkreuzen sich in ihrem mittleren Bereich an einer Kreuzungsstelle 4 und weisen dort eine Steckverbindung auf.

Mittels dieser Vorrichtung 1 ist eine Hohlstruktur 10, beispielsweise als Teil einer tragenden Säulenstruktur eines Fahrzeuges, effektiv versteifbar. Die Versteifungselemente sichern die Hohlstruktur 10 gegen ein Einknicken, insbesondere in den Eckbereichen, bei einem Kraftaufwand von außen, beispielsweise bei einem Crash des Fahrzeuges. Die enorme Steifigkeit einer mit einer Vorrichtung 1 ausgestatteten Säulenstruktur eines Fahrzeuges wird vor allem durch die diagonal, sich überkreuzenden Versteifungselemente 2a, 2b und die starke Haftung der Klebeverbindungen 3a - 3d der Versteifungselemente 2a, 2b mit den Seitenflächen 14a - 14c erreicht.

Die **Figur 6** zeigt eine schematische Querschnittsdarstellung einer Hohlstruktur 10 in einer weiteren Ausführung. In dem Hohlraum 11 der Hohlstruktur 10 sind Versteifungsmittel 2 in Form von zehn, sich jeweils paarweise überkreuzende Platten angeordnet. Die Platten sind paarweise, nebeneinander in dem Hohlraum 11 positioniert, wobei die Enden der Platten jeweils aneinandergrenzen. Die Befestigung der Platten mittels eines strukturellen Klebstoffs und die Verbindung der Platten untereinander an ihrer Kreuzungsstelle entsprechen der Ausführung der Figuren 3 bis 5. Diese Ausführung bewirkt bei einer langen Hohlstruktur 10 eine stärkere Versteifung als eine Ausführung mit Versteifungsmitteln 2, deren Länge der Länge der Hohlstruktur entspricht, da hierbei die Kräfteverteilung gleichmäßiger ist.

Die **Figur 7** zeigt eine schematische Querschnittsdarstellung einer Hohlstruktur 10 in einer weiteren Ausführung. Der Hohlraum 11 der Hohlstruktur 10 wird paarweise durchkreuzt von plattenförmigen Versteifungsmitteln 2, wobei die sich überkreuzenden Versteifungsmittel 2 nicht unmittelbar nebeneinander angeordnet sind. Zwischen den Paaren der Versteifungsmittel sind Bereiche mit strukturellem schäumendem Klebstoff 3 ausgeführt. Die Versteifung des Hohlraums 11 wird hierbei zum einen durch die erfindungsgemäßen Versteifungsmittel 2 und zum anderen durch das Ausschäumen der Seitenflächen mit dem Klebstoff 3 realisiert.

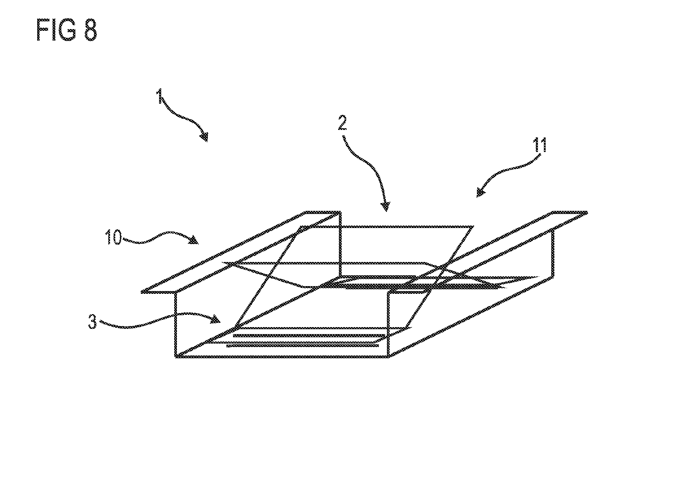

Die **Figur 8** zeigt eine schematische, perspektivische Darstellung einer erfindungsgemäßen Vorrichtung 1 mit einer Hohlstruktur 10 in einer anderen Ausführung. Die einzelnen Komponenten der Vorrichtung 1, das heißt Hohlstruktur 10, Klebstoff 3 und Versteifungsmittel 2, entsprechen prinzipiell den Ausführungen der Figuren 1 bis 4, wobei gleiche Bauteile von gleichen Bezugszeichen gekennzeichnet sind. Auf eine genaue Beschreibung bereits beschriebener Bauteile wird daher verzichtet. Die Ausführung der Vorrichtung 1 gemäß der Figur 8 unterscheidet sich von der Ausführung gemäß der Figur 5 in der Anordnung der Versteifungsmittel 2 in dem Hohlraum 11 der Hohlstruktur 10. Im Vergleich zu der Figur 5 sind die Versteifungsmittel 2 um 90° gedreht. Die Versteifungsmittel 2 sind also quer zu dem länglichen Hohlraum 11 angeordnet. In dieser Ausführung sind beispielsweise mehrere Paare, sich überkreuzende Versteifungsmittel 2 nebeneinander, quer zum Hohlraum 11 in der Hohlstruktur 10 anklebbar.

Insgesamt wird mit der Erfindung also ein Verfahren zum Versteifen einer einen Hohlraum bildenden Hohlstruktur, zumindest umfassend den Schritt einfügen von Versteifungsmitteln in den Hohlraum, vorgeschlagen. Das Verfahren zeichnet sich dadurch aus, dass die Versteifungsmittel sich von einem Eckbereich einer Seitenfläche zu einem anderen, nichtbenachbarten Eckbereich einer anderen Seitenfläche der Hohlstruktur durch den Hohlraum erstrecken. Weiterhin betrifft die Erfindung eine Vorrichtung zum Versteifen einer einen Hohlraum bildenden Hohlstruktur, mittels Versteifungsmitteln. Die Vorrichtung zeichnet sich dadurch aus, dass die Versteifungsmittel als mindestens ein steifes, vorgeformtes Versteifungselement ausgebildet sind. Auch betrifft die Erfindung eine Hohlstruktur, mit mindestens einem Hohlraum, umfassend mindestens ein Versteifungssystem zum Versteifen der Hohlstruktur, und ein Beförderungsmittel mit mindestens einer Säulenstruktur.

Es versteht sich, dass die vorstehend genannten Merkmale der Erfindung nicht nur in der jeweils angegebenen Kombination, sondern auch in anderen

Kombinationen oder in Alleinstellung verwendbar sind, ohne den Rahmen der Erfindung zu verlassen.

### Bezugszeichenliste

- 1: Vorrichtung
- 2: Versteifungsmittel
- 2a: erste Platte
- 2b: zweite Platte
- 3: Klebstoff
- 3a-3d: Klebelinien
- 4: Kreuzungsstelle
- 10: Hohlstruktur
- 11: Hohlraum
- 12a-12d: Eckbereiche
- 13a-13d: Kontaktfläche
- 14a-14c: Seitenflächen

## Patentansprüche

1. Verfahren zum Versteifen einer einen Hohlraum (11) bildenden
Hohlstruktur (10), insbesondere einer einen länglichen Hohlraum (11) bildenden Hohlstruktur (10),
zumindest umfassend den Schritt:
1.1. Einfügen von Versteifungsmitteln (2) in den Hohlraum (11),
**dadurch gekennzeichnet, dass**
1.2. die Versteifungsmittel (2) sich von einem Eckbereich (12a - 12d) einer Seitenfläche (14a - 14c) zu einem anderen, nichtbenachbarten Eckbereich (12a - 12d) einer anderen Seitenfläche (14a - 14c) der Hohlstruktur (10) durch den Hohlraum (11) erstrecken.

2. Verfahren gemäß dem voranstehenden Patentanspruch 1,
**dadurch gekennzeichnet, dass** der Schritt vorgesehen ist: Auftragen mindestens einer Klebelinie (3a - 3d) an mindestens zwei nichtbenachbarten Eckbereichen (12a - 12d) zweier Seitenflächen (14a - 14c) der Hohlstruktur (10), in denen die Versteifungsmittel (2) beidseitig und sich durch den Hohlraum (11) erstreckend, ausgeführt sind.

3. Vorrichtung (1) zum Versteifen einer einen Hohlraum (11) bildenden Hohlstruktur (10), insbesondere einer einen länglichen Hohlraum (11) bildenden Hohlstruktur (10), mittels Versteifungsmitteln (2) zum Einfügen in den Hohlraum (11),
**dadurch gekennzeichnet, dass** die
Versteifungsmittel (2) als mindestens ein steifes, vorgeformtes Versteifungselement (2a, 2b) ausgebildet sind.

4. Vorrichtung (1) gemäß dem voranstehenden Patentanspruch 3,
**dadurch gekennzeichnet, dass**
das mindestens eine Versteifungselement (2a, 2b) zur Befestigung mit der Hohlstruktur (10) an mindestens zwei, in zwei nichtbenachbarten Eckbereichen (12a - 12d) der Hohlstruktur (10) aufgetragenen Klebelinien (3a - 3d) angeordnet ist.

5. Vorrichtung (1) gemäß einem der voranstehenden Patentansprüche 3 oder 4, **dadurch gekennzeichnet, dass** genau zwei Versteifungselemente (2a, 2b) vorgesehen sind, welche sich, sich überkreuzend durch den Hohlraum (11) erstrecken.

6. Vorrichtung (1) gemäß einem der voranstehenden Patentansprüche 3 oder 4, **dadurch gekennzeichnet, dass** das mindestens eine Versteifungselement (2a, 2b) im Schnitt X-förmig gestaltet ist und sich mit seinen Enden in die Eckbereiche des Hohlraums (11) erstreckt.

7. Vorrichtung (1) gemäß einem der voranstehenden Patentansprüche 3 bis 6, **dadurch gekennzeichnet, dass** das mindestens eine Versteifungselement (2a, 2b) Aussparungen aufweist, um eine Materialeinsparung und/oder eine Gewichtsreduktion zu bewirken.

8. Vorrichtung (1) gemäß einem der voranstehenden Patentansprüche 3 bis 7, **dadurch gekennzeichnet, dass** das mindestens eine Versteifungselement (2a, 2b) aus mindestens einem Material ausgebildet ist, ausgewählt aus der folgenden Materialgruppe: Metall, Stahl, insbesondere hochfester Stahl, Aluminium, Kunststoff, insbesondere Polyamid, kohlenfaserverstärkter Kunststoff und glasfaserverstärkter Kunststoff.

9. Vorrichtung (1) gemäß einem der voranstehenden Patentansprüche 3 bis 8, **dadurch gekennzeichnet, dass** die mindestens zwei Klebelinien (3a - 3d) aus einem Material ausgebildet sind, ausgewählt aus der folgenden Materialgruppe: strukturelle Klebstoffe.

10. Hohlstruktur (10), insbesondere eine längliche Hohlstruktur (10), mit mindestens einem Hohlraum (11), umfassend mindestens ein Versteifungssystem zum Versteifen der Hohlstruktur, **dadurch gekennzeichnet, dass** das mindestens eine Versteifungssystem als Vorrichtung (1) gemäß einem der voranstehenden Patentansprüche 3 bis 8 ausgebildet ist.

11. Hohlstruktur (10) gemäß dem voranstehenden Patentanspruch 10,
**dadurch gekennzeichnet, dass**
die Hohlstruktur (10) aus mindestens einem Material ausgebildet ist, ausgewählt aus der folgenden Materialgruppe: Metall, Stahl, insbesondere hochfester Stahl, Aluminium, Kunststoff, insbesondere Polyamid, kohlenfaserverstärkter Kunststoff und glasfaserverstärkter Kunststoff.

12. Beförderungsmittel mit mindestens einer Säulenstruktur, **dadurch gekennzeichnet, dass** die mindestens eine Säulenstruktur als Hohlstruktur (10) gemäß einem der voranstehenden Patentansprüche 10 oder 11 ausgebildet ist.
